Europäisches Patentamt

European Patent Office

Office européen des brevets

(11) Veröffentlichungsnummer: **0 275 881**
**A2**

(12) **EUROPÄISCHE PATENTANMELDUNG**

(21) Anmeldenummer: **88100152.3**

(22) Anmeldetag: **08.01.88**

(51) Int. Cl.⁴: **G11B 9/10 , G11B 9/02**

(30) Priorität: **20.01.87 DE 3701412**

(43) Veröffentlichungstag der Anmeldung:
**27.07.88 Patentblatt 88/30**

(84) Benannte Vertragsstaaten:
**DE FR GB IT NL SE**

(71) Anmelder: **BAYER AG**

**D-5090 Leverkusen 1, Bayerwerk(DE)**

(72) Erfinder: **Dransfeld, Klaus, Prof. Dr.**
**Immenstall**
**CH-8272 Ermatingen(CH)**
Erfinder: **Pott, Richard, Dr.**
**Im Rosengarten 4**
**D-5090 Leverkusen 3(DE)**
Erfinder: **Kämpf, Günther, Dr.**
**Wöhlerstrasse 6**
**D-4150 Krefeld(DE)**

(54) **Verfahren zur Ein- bzw. Auslesen von Informationen in elektrisch polarisierbare Schichten unter Verwendung eines Rastertunnelmikroskops.**

(57) Das Verfahren zum Einschreiben und Auslesen von Informationen beruht darauf, daß ein elektrisch polarisierbares Speichermedium in Form einer dünnen, gleichmäßigen Schicht (3) auf eine Basiselektrode (2) aufgebracht wird und die Informationen mit Hilfe eines Rastertunnelmikroskops in die polarisierbare Schicht (3) ein-bzw. ausgelesen werden. Als Speichermedium werden vorzugsweise Polymere mit stark polarisierbaren Endgruppen verwendet. Bei entsprechender Optimierung können mit diesem Verfahren Speicherdichten in der Größenordnung von $10^{10}$ bit/cm² erreicht werden.

FIG. 1

EP 0 275 881 A2

## Verfahren zum Ein-bzw. Auslesen von Informationen in elektrisch polarisiebare Schichten unter Verwendung eines Rastertunnelmikroskops

Die Erfindung betrifft einen elektrisch löschbaren Datenspeicher höchster Dichte auf Basis elektrisch polarisierbarer dünner Schichten unter Verwendung des Restertunnelmikroskops.

Der Trend zu Datenspeichern immer höherer Aufzeichnungsdichte ist stark ausgeprägt. Bei den kommerziell erhältlichen Datenspeichern existiert ein Grenzwert von ca. $10^8$ bit/cm², der mit den heute üblichen Aufzeichnungsmethoden (Halbleiterspeicher, magnetische, optische resp. magneto-optische Datenaufzeichnungsverfahren) in absehbarer Zukunft nicht deutlich überschritten werden kann.

Benötigt werden aber Speicher mit wesentlich höheren Speicherdichten als $10^8$ bit/cm², wobei je nach Anwendungsfall weitere entscheidende Größen die Zugriffszeit, Datenübertragungsrate, Kosten pro bit, Lebensdauer der gespeicherten Information und Kompatibilität zu existierenden Speicher-rsp. Rechnersystemen sind. In den neunziger Jahren werden folgende Daten angestrebt:

Speicherdichten $10^{11}$ bit/cm²
Zugriffszeiten $10^{8}$ sec
Datenübertragungsraten $10^8$ bit/sec
Permanenz 10 Jahre und löschbar.

Zur Einstellung dieser Zielgrößen werden derzeit im wesentlichen drei Entwicklungsrichtungen verfolgt:

1. Laser-Holographie bzw. fotochemisches Lochbrennen (J. Friedrich, D. Haarer, Angew. Chem. 96, 96-123 (84))

2. Verwendung von Elektronenstrahlen

3. Molekulare Systeme (Biochip).

Speicher auf Basis elektrisch polarisierbarer Schichten sind seit Anfang der fünfziger Jahre bekannt. Während Merz und Anderson unbewegliche Speichersysteme beschrieben haben (W. J. Merz, J.R. Anderson, "Ferroelectric Storage Devices", Bell Lab. Rec. 33, 335-342 (1955)), sind durch Pulvari in dem US-Patent 2 698 928 die grundlegenden Verfahren für einen beweglichen Speicher entwickelt worden. Hierbei wird ein Band/Platte,bestehend aus einem elektrisch polarisierbaren Material, das eine elektrisch leitende Unterschicht besitzt, an einer Elektrode vorbeibewegt. Durch Beaufschlagen der Elektrode mit einer Spannung werden Bereiche der elektrisch polarisierbaren Schicht remanent polarisiert und dadurch Information gespeichert. Die Elektrode kann sich sowohl in direktem Kontakt mit der Schicht befinden als auch einen definierten Abstand aufweisen. Andere Verfahren zur Erzeugung polarisierter Bereiche basieren auf der Verwendung von Elektronenstrahlen bzw. Ionenbeschuß. Zum Auslesen der gespeicherten Information wird der piezoelektrische Effekt verwendet, d.h. auf die elektrisch polarisierbare Schicht wird ein Zug/Druck durch Vorbeibewegen an einer scharfen Kante oder durch Verwendung von Ultraschall ausgeübt, so daß die freigesetzten Ladungen eine Spannung in der Elektrode induzieren, die proportional zu der beim Schreibvorgang verwendeten Spannung ist. Als elektrisch polarisierbare Medien werden anorganisch polarisierbare Ferroelektrika aber auch elektrisch polarisierbare Kunststoffe genannt.

Neben der piezoelektrischen Auslesung wurde Ende der sechziger Jahre bei bandförmigen bzw. plattenförmigen Speichern der pyroelektrische Effekt zur Auslesung verwendet (H. Niitsuma, R. Sato, Ferroelectrics 34, 37 (1980)). Hierbei wurden Spannungen durch Erhitzen der elektrisch polarisierten Schicht in den abgreifenden Schleifelektroden erzeugt. Als elektrisch polarisierbare Schicht wurden anorganische Materialien wie Pb (ZrTi)-03/(PZT) verwendet. In einem zu dem von Niitsuma und Sato vorgeschlagenen analogen Verfahren unter Verwendung von Schleifelektroden und pyroelektrischer Auslesung wird in dem US-Patent 4 389 445 eine polarisierbare makromolekulare Schicht, wie z.B. Polyvinylidenfluorid (PVdF) eingesetzt, die im Vergleich zu anorganischen Schichten einige grundsätzliche Vorteile bezüglich chemischer Stabilität, niedriger Dielektrizitätskonstante, einfacher Handhabbarkeit usw. für sich in Anspruch nehmen kann. Ebenfalls auf Basis PVdF wird ein Datenspeicher in dem US-Patent 4 059 827 beschrieben, wobei das Einlesen direkt mit Elektronenstrahl und das Auslesen über die Aufweitung des Elektronenstrahls an polarisierten PVdF-Domänen erfolgt. Bei dem Elektronenstrahlverfahren sind prinzipiell Vorteile gegenüber dem Schleifelektrodenverfahren bezüglich der Dichte der aufzuzeichnenden Information zu erwarten. Während der Durchmesser der Schleifelektrodenfläche aus mechanischen Stabilitätsgründen kaum unter 10 μm liegen dürfte, liegt der prinzipielle Durchmesser des zur Polung benutzten Elektronenstrahls bei ca. 10 nm. Allerdings führen die Streuprozesse beim Eindringen des Elektronenstrahls in die Schicht zu einer lateralen Auffächerung des Elektronenstrahls, so daß gepolte Bereiche deutlich unter 1 μm Durchmesser nicht zu erwarten sind. Eine Weiterentwicklung zu einem Speicher hoher Dichte ist demnach auch bei diesem Verfahren nicht bekannt.

Das von Binnig und Rohrer konzipierte Rastertunnelmikroskop (EP 0 027 517; Scanning Tunneling Microscope STM) bietet die laterale Auflösung des besten bis dahin bekannten Elektronenmi-

kroskops. Bei diesem Mikroskop wird unter Ausnutzung des Tunneleffektes eine außerordentlich fein zugespitzte metallische Nadel in einem sehr geringen Abstand (typischerweise < 1 nm) über die zu untersuchende elektrisch leitende Fläche geführt. Bedingt durch diesen geringen Abstand und die kleine Dimension der Spitze wird eine außerordentlich hohe laterale Auflösung (< 10 nm) erreicht.

Während die ersten sehr aufwendig konstruierten STM's noch tiefe Temperaturen und Ultrahochvakuumbedingungen benötigten, ist es in letzter Zeit gelungen, das STM auch unter normalen Umgebungsbedingungen (Luft, Raumtemperatur) zu betreiben (Drake, Sonnenfeld, Schneir, Hansma, Slough, Coleman, Rev. Sci. Instr. 57, 441 - 445 (1986)). Die anfangs relativ kleine Scan-Rate konnte inzwischen stark vergrößert werden. Zur Zeit liegen die Scan-Raten im kHz-Bereich (Bryant, Smith, Quate, Appl. Phys. Lett. 48, 832 - 834 (1986). Darüberhinaus wurden auch die Dimensionen des STM zunehmend kleiner. So existiert z.B. ein sogenanntes Taschentunnelmikroskop, das eine Größe von kleiner 10 cm x 10 cm aufweist.

Somit ist das STM als hochsensitives Oberflächenrauhigkeitsmeßgerät relativ universell und praxisnah einsetzbar und der Gedanke liegt nahe, das STM auch zur Mikrostrukturierung zu verwenden. In der Tat wurde die Verwendbarkeit des STM zu lithographischen Zwecken bereits erfolgreich getestet (Ringger, Hidber, Schlögl, Oelhafen, Güntherodt, Appl. Phys. Lett. 46, 832 - 834 (1985)), wobei eine Auflösung von 10 nm erreicht wurde.

Ausgehend von einer elektrisch polarisierbaren Schicht als Speichermedium liegt der Grundgedanke der Erfindung darin, unter Verwendung eines Rastertunnelmikroskops (STM) einen elektrisch löschbaren Datenspeicher zu entwickeln, derart, daß mittels des STM Information in die elektrisch polarisierbare Schicht ein-und ausgelesen werden kann, wobei diese Information in Form polarisierter Zustände permanent abgelegt wird.

Voraussetzung für die Verwendung des STM ist eine außerordentlich glatte Oberfläche. Zur Lösung der erfindungsgemäßen Aufgabe wurde deshalb eine sehr glatte Unterlage (Mittlere Rauhigkeit <1 nm) mit einer dünnen Schicht (typisch 1 μm) eines leitfähigen Materials versehen und darauf anschließend die elektrisch polarisierbare Schicht aufgebracht, die eine Schichtdicke < 10 μm,vorzugsweise < 1 μm, aufweist. Als Methode können die üblichen Verfahren zur Herstellung dünner Schichten wie CVD, PVD verwendet werden. Das Schichtmaterial können anorganische Ferroelektrika wie Triglycinsulfat, (TGS), Bariumtitanat ($BaTiO_3$), Blei/Zirkontitanat (PLZT), Wismuttitanat, Natriumnitrit ($NaNO_2$) usw. Verwendung finden. Vorzugsweise sollten aber Materialien eingesetzt werden, die zumindest an Luft chemisch stabil sind. Als Speicherschichten werden deshalb vorteilhaft Polymere mit leicht polarisierbaren Atomen verwendet, z. B. Polyolefine mit Fluoratomen, wie etwa das Polyvinylidenfluorid PVdF oder Polymere mit stark polarisierbaren Endgruppen, z. B. Polyolefine mit Cyangruppen, wie etwa das Polyvinylidencyanid. Eine Optimierung der Speicherschicht, z. B. bezüglich Schaltverhalten, kann durch Copolymerisation oder durch Abmischung erreicht werden. So sind beispielsweise anstelle von PVdF besser geeignete Copolymerisate von PVdF mit $PVF^3$ oder Abmischungen mit Polymethylmethacrylat PMMA oder anstelle von Polyvinylidencyanid mit Polyvinylacetat u. a. verwendbar. Diese können aus Lösung durch Spin-Coaten in Schichten kleiner 1 μm aufgebracht werden. Anwendbar ist aber auch die Langmuir Blodgett Technik für das Aufbringen molekularer elektrisch polarisierbarer Schichten.

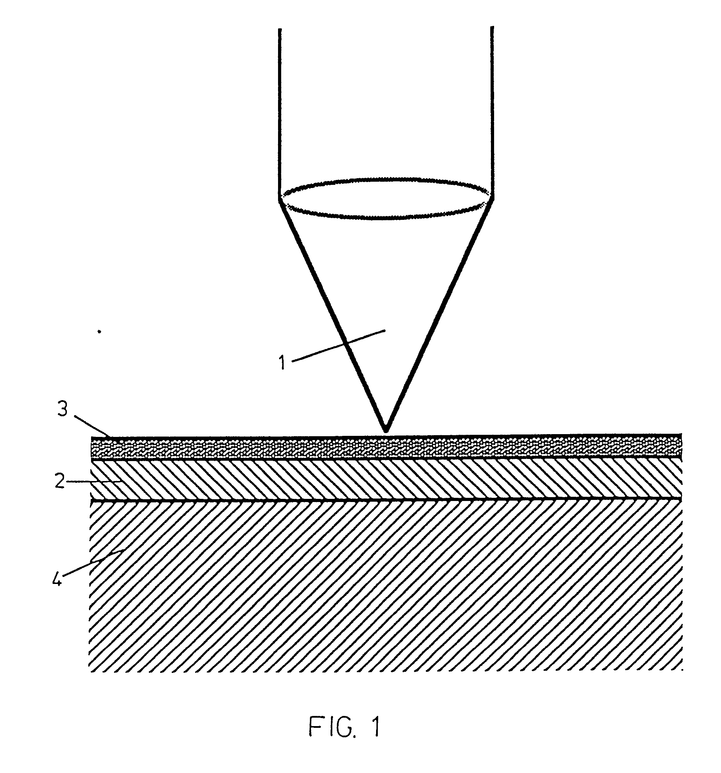

Bei Untersuchungen von polarisierbaren Schichten mit einem STM wurde überraschend gefunden, daß auf einem mit PVdF/TrFE präparierten Si-Wafer 2 Information durch das STM mittels Polarisierung der dünnen elektrisch polarisierbaren Schicht 3 eingeschrieben werden kann. Zu diesem Zweck wurde der Si-Wafer auf den Probenhalter des STM montiert und zwischen Spitze 1 und A1-Grundfläche 4 (s. Fig. 1) eine Spannung von ca. 1 V angelegt. Das dadurch angelegte elektrische Feld von ca. 100 MV/m führt zu einer Polarisierung der PVdF/TrFE-Schicht, wobei überraschenderweise die bei der Polung mittels Elektronenstrahl nach dem Stand der Technik beobachtete minimale Größe des gepolten Bereiches von ca. 1 μm² -bedingt durch die laterale Auffächerung des Elektronenstrahls - deutlich unterschritten werden konnte. Die Größenanalyse, durchgeführt mittels pyroelektrischer Aktivierung in einem Elektronenmikroskop, ergab einen Wert von ca. 100 nm², d. h. mit diesem Verfahren sind Speicherdichten von $10^{10}$ bit/cm² erreichbar. Hierbei wurde von uns ein direkter Zusammenhang zwischen Schichtdicke des PVdF/TrFE und erreichbarer Speicherdichte beobachtet. Je kleiner die Schichtdicke, desto kleiner ist die Fläche des polarisierten Bereiches. In ähnlicher Weise geht der Abstand Spitze 1 - Schicht 3 ein. Bei Abständen größer als 1 μm kann durch die Spitze - bei entsprechender Erhöhung der an der Spitze anliegenden Spannung - ebenfalls eine elektrische Polarisierung der Schicht erreicht werden, wobei allerdings die laterale Auflösung ebenfalls im μm-Bereich zu liegen kommt. Bei noch größeren Abständen liegt der bekannte Fall der Coronapolung vor.

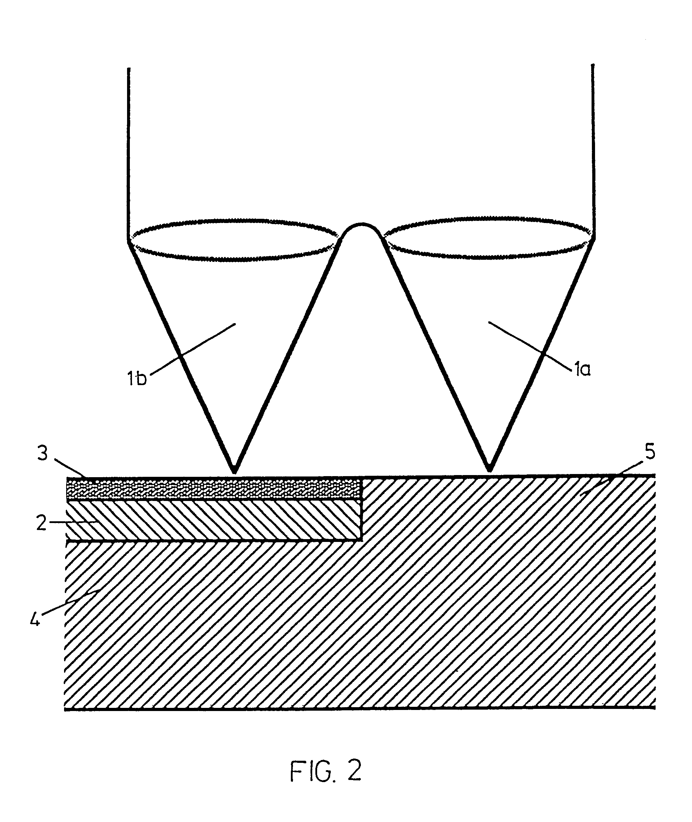

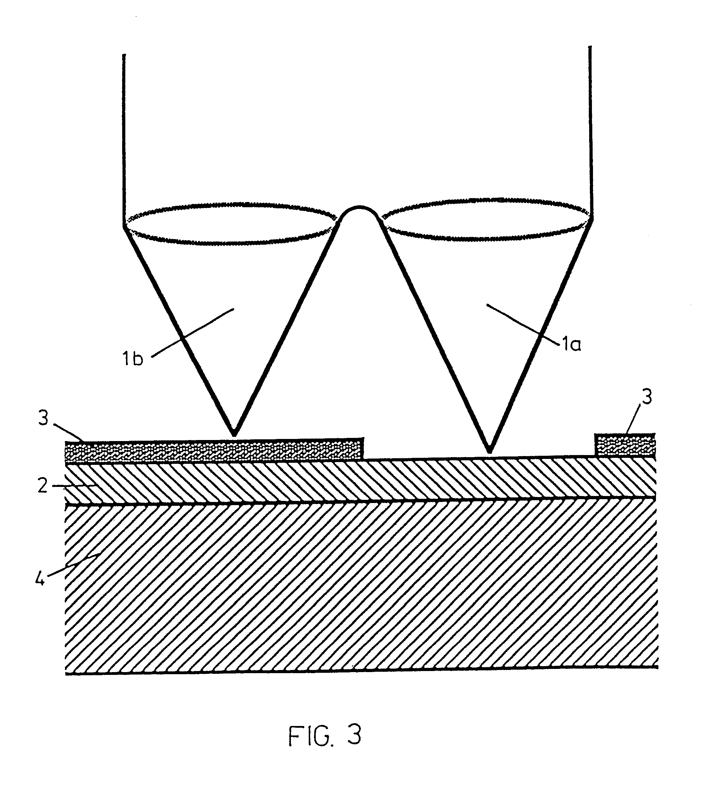

Bei Schichtdicken oberhalb von 50 nm ist das STM nicht mehr funktionsfähig, d.h. die Justierung der Spitze 1 konnte nicht mehr durchgeführt werden. Hierbei ist anzumerken, daß auch unterhalb von 50 nm Schichtdicke Probleme bezüglich der Reproduzierbarkeit vorhanden sind. Als alternative Lösung zur Behebung dieses Problems wurde deshalb von uns ein geringfügig modifizierter Aufbau verwendet. Zur Einstellung des Abstandes Spitze 1b - ferroelektrische Schicht 3 findet eine Zwillingsspitze 1a Verwendung (siehe Fig. 2), wobei die zweite Spitze 1a die Justierung des STM mittels eines dafür vorgesehenen elektrisch leitfähigen Rasens 5 vornimmt, d.h. diese Spitze reguliert ausschließlich den Abstand der ersten zum Schreiben/Lesen verwendeten Spitze 1b mit der elektrisch polarisierbaren Schicht 3. Zur Erstellung des Rasens wird z.B. der Si-Wafer 2 derart vorbereitet, daß leitfähige Strukturen entweder aus Polysilicium oder aus Metallsiliciden unterschiedlicher vertikaler Strukturierung mittels konventioneller Ätz- und Entwicklungstechniken hergestellt werden. Anschließend wird die elektrisch polarisierbare Schicht 3 aufgebracht, und zwar derart, daß die weiter herausragende leitfähige Struktur nicht damit bedeckt wird bzw. in einem Planarisierungsprozeß entfernt wird. Eine andere Lösung besteht in der Strukturierung der elektrisch polarisierbaren Schicht 3. (s. Fig. 3). Diese kann dem Stand der Technik entsprechend durch eine Beschichtung der elektrisch polarisierbaren Schicht mit einem konventionellen Photoresist und entsprechendes Belichten, Entwickeln und Ätzen erreicht werden. Die Strukturierung ist auch durch direkte Laserlithographie erreichbar.

Das Auslesen der eingeschriebenen Information kann mittels mehrerer alternativer Verfahren durchgeführt werden. Als erste Methode kann das zerstörende Lesen Verwendung finden, d.h. mittels der Schreibelektrode 1b wird beispielsweise die binäre Information 1 permanent abgelegt und der dabei aufzuwendende Schreibstrom registriert. Falls praktisch kein Strom fließt, stimmt die abgelegte Information mit der überschriebenen Information überein. Im anderen Fall wäre vorher eine 0 abgelegt worden. Alternativ kann der zu lesende Bereich pyroelektrisch,z.B. mittels Einstrahlung eines Laserstrahls, durch gezieltes galvanisches Erhitzen des Substrats oder durch hochfrequentes Erhitzen der Speicherschicht, durchführbar durch 1b aktiviert werden und das dadurch erzeugte Signal, z.B. mit einer Elektrometersonde höchster Auflösung in einer Standardelektrometer schaltung (wie z.B. beim Monroe 145 MOSFET-Elektrometerfolger) nachgewiesen werden.

Die mit einem provisorischen Aufbau beobachteten Datenübertragungsraten liegen bei ca. 1 KHz und die erreichte Speicherdichte bei ca. $10^{10}$ bit/cm². 

Im folgenden soll anhand von Ausführungsbeispielen die Herstellung der Speicherfläche, Zwillingsspitze sowie das Funktionsprinzip näher beschrieben werden.

## Ausführungsbeispiel

Ein Si-Wafer wird mit A1 bedampft (Schichtdicke typisch 1 μm) und anschließend mit PVdF auf einem handelsüblichen Spin-Coater (CONVAC 1001) beschichtet. Dazu wird PVdF in DMF (Dimethylformamid) unter leichtem Erwärmen in Lösung gebracht. Von uns verwendet wurden Lösungen mit einem Volumenprozentanteil von kleiner 10 % typischerweise 1 %. Die abgeschleuderte Lösung - gearbeitet wurde je nach Viskosität der Lösung - mit einer Umdrehungszahl von einigen hundert bis einigen tausend Umdrehungen pro Minute. Der derart beschichtete Wafer wird anschließend typischerweise 60 Minuten zwischen 40 C und 260 C,vorzugsweise zwischen 180 C und 220 C in einem Trockenschrank getempert. Zur Herstellung dünner Schichten (< 100 nm) wird vorzugsweise mit sehr hohen Umdrehungszahlen (> 5000) gearbeitet. Die erreichten Schichtdicken liegen dann deutlich unter 100 nm, typischerweise bei 30 nm, wobei die Schichtdicke sowohl interferometrisch als auch ellipsometrisch bestimmt wurde. Bei einer Dicke von typisch 50 nm war die Dickenschwankung Mitte - Rand bei einen 4 Zoll Wafer kleiner als 10 %. Die Oberflächenrauhigkeit Ra wurde mit Hilfe eines Tastschnittgerätes (Sloan Technology Corporation) kleiner als 0,02 μm bestimmt. Da die derart hergestellte PVdF Speicherschicht in einer ferroelektrisch unzureichenden Phase vorliegt, wird anschließend mittels Coronapolung die erwünschte ferroelektrische Phase I (auch β -Phase genannt) eingestellt.

Ein Copolymeres von PVdF/TrFE der Zusammensetzung 60/40 bzw. 75/25 wird unter leichtem Erwärmen in DMF und in Aceton in Lösung gebracht. Typischerweise wurde mit einem Volumenprozentanteil von kleiner 10 % gearbeitet. Die Lösung wird dann mit dem Spin-Coater auf den vorbereiteten Wafer geschleudert und anschließend direkt getempert. Bei den in DMF gelösten Proben wird mit einer Tempertemperatur von größer 100 C gearbeitet, wobei vorzugsweise eine Temperatur zwischen 140 und 220 C eingestellt wird. Bei den in Aceton gelösten Proben wird bei einer Temperatur kleiner 180 C getempert, beträgt typischerweise immer 60 Minuten. Die von der Viskosität der Ausgangslösungen und der eingestellten Umdrehungsfrequenz des Spin Coaters abhängigen Schichtdicken wurden zwischen 20 nm und 2000 nm bestimmt. Die Oberflächenrauhigkeit war bei einer Schichtdicke von typisch 100 nm kleiner als 2 nm und die relative Dickenschwankung kleiner als 10

%.

Als Spitze findet eine Mo-Nadel Verwendung, die elektrochemisch in einer 1 molaren NaOH Lösung mit Ni als Gegenelektrode bei 4 V - 6 V und 50 Hz geätzt wird. Zur Ausbildung der Zwillingsspitze wurde eine Zwillingsnadel mechanisch hergestellt und anschließend ebenfalls elektrochemisch geätzt. Die Zwillingsnadel ist hierbei so konstruiert, daß die beiden Spitzen galvanisch voneinander getrennt sind. Zur Erreichung eines definierten nach Fig. 3 notwendigen Höhenunterschieds der Spitzen wird in dem letzten Prozeßschritt ausschließlich die Spitze 1b mit der Wechselspannung beaufschlagt und kurze Zeit weiter geätzt. Erste Versuche mit elektrisch nicht entkoppelten Spitzen konnten mittels Passivierung einer Spitze ebenfalls erfolgreich abgeschlossen werden.

Das Rastertunnelmikroskop (STM) und die dazugehörigen Justiereinrichtungen und elektronischen Auswerteschaltungen gehören zum Stand der Technik und sind in der Literatur bereits ausführlich beschrieben worden (s. z.B. EP 0 027 517), so daß hier auf eine nähere Erläuterung verzichtet werden kann.

## Ansprüche

1. Verfahren zum Einschreiben und Auslesen von Informationen in ein elektrisch polarisierbares Speichermedium, insbesondere in eine ferroelektrische Schicht, dadurch gekennzeichnet, daß das Speichermedium in Form einer dünnen gleichmäßigen Schicht auf eine Basiselektrode aufgebracht wird und die Informationen mit Hilfe eines Rastertunnelmikroskops in die polarisierbare Schicht ein-bzw. ausgelesen werden.

2. Verfahren nach Anspruch 1, dadurch gekennzeichnet, daß anorganische ferroelektrische Schichten als Speichermedium verwendet werden.

3. Verfahren nach Anspruch 1, dadurch gekennzeichnet, daß Polymere mit stark polarisierbaren Endgruppen als Speichermedium verwendet werden.

4. Verfahren nach Anspruch 3, dadurch gekennzeichnet, daß Copolymerisate von Polyvinylidenfluorid (PVdF) mit PVF 3 oder mit TrFE als Speichermedium verwendet werden.

5. Verfahren nach den Ansprüchen 1 bis 4, dadurch gekennzeichnet, daß das Speichermedium mit einer Schichtdicke von 25 nm bis 100 nm, vorzugsweise 30 nm bis 50 nm, auf die Basiselektrode aufgebracht wird.

6. Verfahren nach den Ansprüchen 1 bis 4, dadurch gekennzeichnet, daß das Speichermedium in einem Teilbereich auf die Basiselektrode aufgebracht wird und ein angrenzender Bereich auf der Basiselektrode als Referenzabtastfeld ausgebildet ist und daß zum Einschreiben und Auslesen ein modifiziertes Rastertunnelmikroskop mit einer Zwillingsspitze verwendet wird, wobei die eine Spitze dem Referenzabtastfeld zugeordnet ist und nur zur Einregulierung des Abstandes der zum Schreiben/Lesen dienenden anderen, dem Speichermedium zugeordneten Spitze verwendet wird.

7. Verfahren nach Anspruch 6, dadurch gekennzeichnet, daß das Referenzabtastfeld in Form eines leitfähigen Rasens auf einen mit der Basiselektrode verbundenen Silicium-Wafer aufgebracht wird.

8. Verfahren nach Anspruch 6, dadurch gekennzeichnet, daß zur Herstellung der Referenzabtastfelder Teilbereiche des Speichermediums abgeätzt werden.

FIG. 1

FIG. 2

FIG. 3